# EUROPEAN PATENT APPLICATION

(11) **EP 4 703 394 A1**
(43) Date of publication of application: **04.03.2026**
(21) Application number: 24796975.1
(22) Date of filing: 22.04.2024
(51) Int. Cl.: C08F 30/08, C07F 7/10, C08F 20/18, C08F 290/14, C08G 73/02, C08G 77/388, C08G 77/452

(54) **ORGANOPOLYSILOXANE COMPOUND, COMPOSITION CONTAINING SAME, AND CURED PRODUCT THEREOF**

(30) Priority: 27.04.2023 JP 2023073658
(71) Applicant: SHIN-ETSU CHEMICAL CO., LTD., Tokyo 1000005 (JP)
(72) Inventor: SUZUKI Takayuki, Annaka-shi, Gunma 379-0224 (JP)
(74) Representative: Angerhausen, Christoph
(86) International application number: PCT/JP2024/015746
(87) International publication number: WO 2024/225229

(57) **Abstract**

Provided is a highly reactive organopolysiloxane compound, a composition containing the same, and a cured product thereof. The organopolysiloxane compound is represented by formula (1) 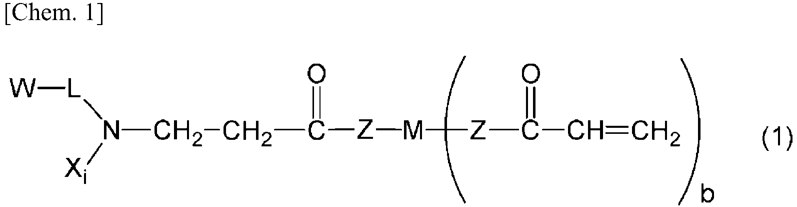 wherein, in formula (1), W is a monovalent organopolysiloxane residue, L represents an alkylene group having 2 to 12 carbon atoms, each Z independently represents an oxygen atom or the like, b is a number of 2 to 20, M represents a polyvalent organic group having (b+1) valency, Xᵢ represents at least one group selected from a hydrogen atom, an alkyl group having 1 to 18 carbon atoms and a group represented by formula (3) 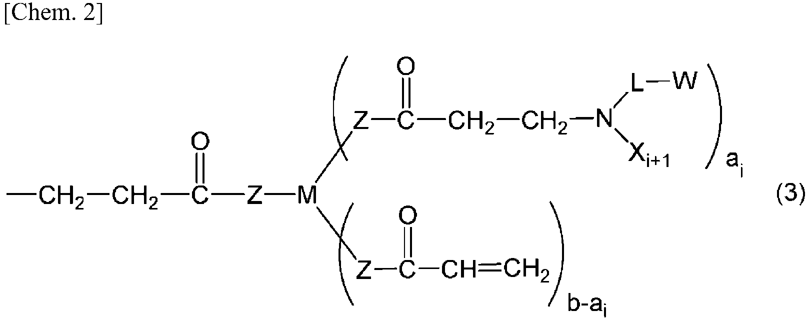 wherein, in formula (3), M, Zs, Ls, Ws, b and Xᵢs are as defined above, i is a number of 1 to 5 provided that i begins with 1, and aᵢ is a number of 0 to b provided that a₅ is 0.

## Description

### Technical Field

The present invention relates to an organopolysiloxane compound having acryloyl groups that are radically polymerizable, a composition containing the same, and a cured product thereof.

### Background Art

In recent years, as energy saving and reduction in the number of steps are demanded more than ever, a light curable resin that is curable at room temperature in a short period of time has gained attention and such resin generally employs a radically polymerizable acrylic compound as an ingredient. This light-curable resin is used in, for example, paints, coatings, or inks, where high water repellency, antifouling properties, lubricity, or similar characteristics are sometimes required.

A method known for imparting high water repellency, antifouling properties, lubricity, or similar characteristics to a light-curable resin includes the formulation of a (meth)acryloyl group-containing organopolysiloxane for copolymerization (Patent document 1).

However, many (meth)acryloyl group-containing organopolysiloxanes exhibit low reactivity, often leading to challenges such as the bleeding of unreacted organopolysiloxanes from the cured resin over time (Patent document 2).

In view of this, an organopolysiloxane compound capable of addressing these issues has been highly sought after.

### Prior Art Documents

### Patent documents

Patent document 1: JP-A-2022-138932
Patent document 2: JP-A-2005-36018

### Summary of Invention

### Technical Problem

It is therefore an object of the present invention to provide a radically polymerizable organopolysiloxane compound that is highly reactive, a composition containing the same, and a cured product thereof.

### Solution to Problem

The inventor of the present invention has diligently conducted a series of studies to solve the above problems and has found that a specific type of organopolysiloxane compound having acryloyl groups can achieve the above object, thus completing the present invention.

That is, the present invention is directed to those as set forth below.

<1> An organopolysiloxane compound represented by formula (1) defined as 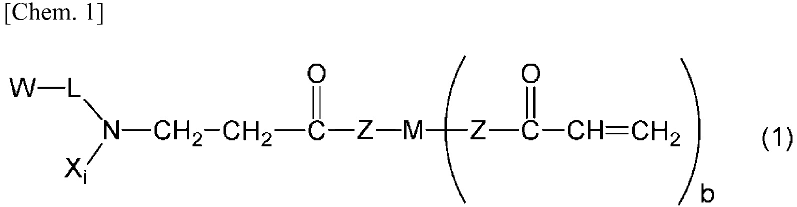
   wherein, in the formula (1), W is a group represented by formula (2) defined as 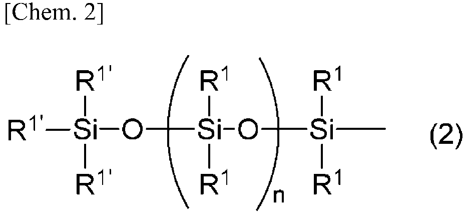 wherein, in the formula (2), each of R¹s and R^{1'}s independently represents a group selected from an alkyl group having 1 to 18 carbon atoms and an aryl group having 6 to 18 carbon atoms, and n is a number of 0 to 500, and
   wherein L represents an alkylene group having 2 to 12 carbon atoms, each Z independently represents an oxygen atom, a sulfur atom, or a group represented by NR² where R² in the NR² is a hydrogen atom or an alkyl group having 1 to 12 carbon atoms, b is a number of 2 to 20, M represents a polyvalent organic group having (b+1) valency, Xᵢ represents at least one group selected from a hydrogen atom, an alkyl group having 1 to 18 carbon atoms (said alkyl group optionally containing at least one selected from an ether bond, an ester bond, an amide bond, and a hydroxyl group) and a group represented by formula (3) defined as 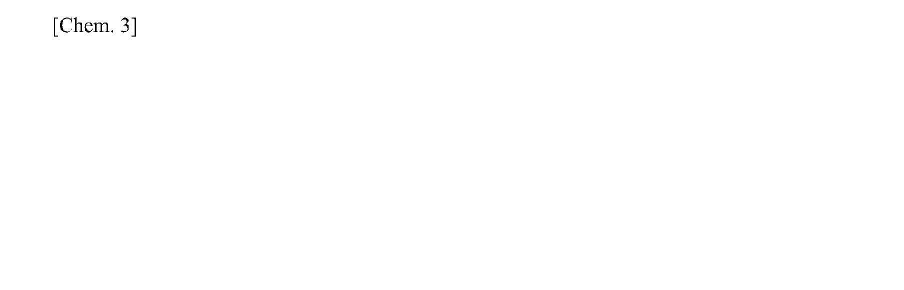 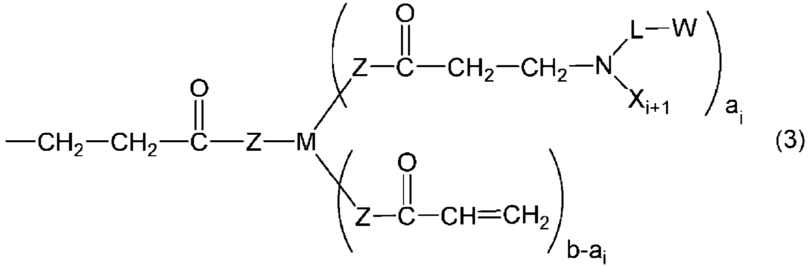 wherein, in the formula (3), M, Zs, Ls, Ws, b and Xᵢs are as defined above, i is a number of 1 to 5 provided that i begins with 1, and aᵢ is a number of 0 to b provided that a₅ is 0.
<2> The organopolysiloxane compound according to <1>, wherein Xᵢ is a group represented by the formula (3).
<3> The organopolysiloxane compound according to <1> or <2>, wherein Xᵢ is a group represented by the formula (3) and i is a number of 1 to 3.
<4> A composition comprising the organopolysiloxane compound according to any one of <1> to <3>.
<5> The composition according to <4>, further comprising at least one acrylic compound that is not a compound of said organopolysiloxane compound.
<6> The composition according to <5>, wherein the acrylic compound is a polyvalent acrylic monomer having a valence of (b+1).
<7> A cured product of the composition according to any one of <4> to <6>.

### Advantageous Effects of Invention

The organopolysiloxane compound of the present invention has, per one molecule, at least two acryloyl groups at locations that are sterically close to each other within the molecule, is highly light curable and reactive, and is less likely to cause bleeding when it is formulated in a light curable resin composition and copolymerized therewith. Moreover, the organopolysiloxane compound of the present invention cures with a lesser amount of energy, enabling energy saving and a reduction in the number of steps for producing a cured product thereof.

The present invention is suitable for, for example, paints, coating agents, and inks.

### Brief Description of Drawings

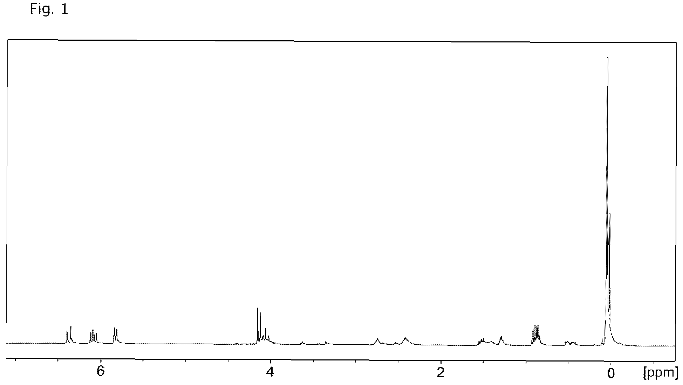

FIG. 1 is a ¹H-NMR spectrum chart of an organopolysiloxane compound synthesized in Working Example 1.

### Description of Embodiments

The present invention will be described hereunder in greater detail.

### [Organopolysiloxane compound]

The organopolysiloxane compound of the present invention is represented by formula (1) defined below and has at least two acryloyl groups per one molecule, which enables the compound to be reacted with a radically polymerizable compound.

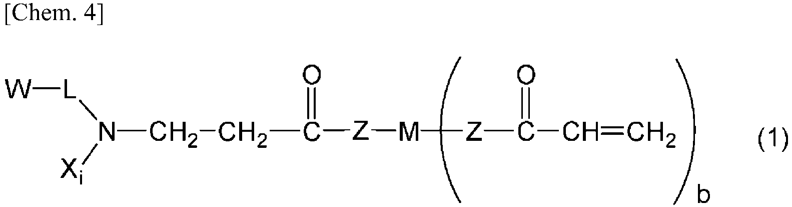

In the formula (1), W is a group (a monovalent organopolysiloxane-containing group) represented by formula (2) defined as

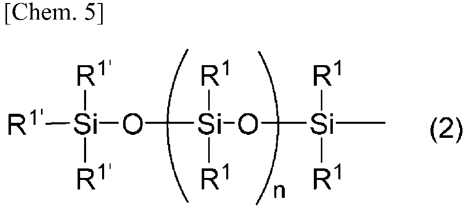

In formula (2), each R¹ independently represents a group selected from an alkyl group having 1 to 18 carbon atoms and an aryl group having 6 to 18 carbon atoms, and is preferably a methyl group or a phenyl group. Each R^{1'} independently represents a group selected from an alkyl group having 1 to 18 carbon atoms and an aryl group having 6 to 18 carbon atoms, and is preferably a methyl group, an n-butyl group, or a phenyl group, and is more preferably a methyl group or an n-butyl group. n is a number of 0 to 500, preferably a number of 3 to 200, and more preferably a number of 8 to 60.

Examples of groups represented by the above formula (2) include, but are not particularly limited to, groups represented by formulae (4) to (8) defined as:

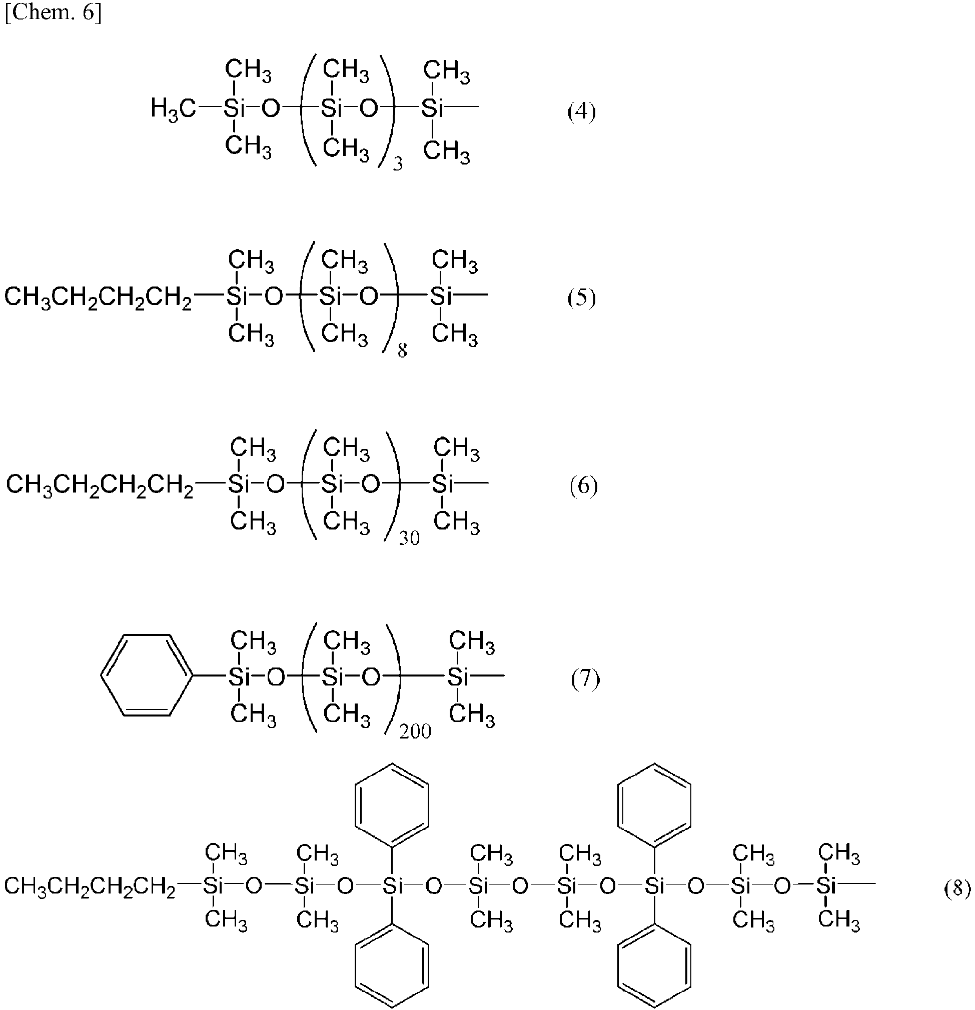

In the formula (1), L represents an alkylene group having 2 to 12 carbon atoms, preferably an alkylene group having 3 to 8 carbon atoms, and more preferably an alkylene group having 3 to 4 carbon atoms.

In the formula (1), each Z independently represents an oxygen atom, a sulfur atom, or a group represented by NR², and is preferably an oxygen atom. R² in the NR² is a hydrogen atom or an alkyl group having 1 to 12 carbon atoms, and is preferably a hydrogen atom.

In the formula (1), b is a number of 2 to 20, preferably of 2 to 10, and more preferably of 2 to 5.

In formula (1), M represents a polyvalent organic group having (b+1) valency (For example, a chain hydrocarbon group having 2 to 50 carbon atoms, optionally including ether and ester bonds). Preferably, M is a tri- to hexa-valent polyvalent group, and more preferably is a tri- to hexa-valent aliphatic hydrocarbon group optionally having an ether bond, an ester bond, and/or a hydroxyl group.

Examples of the polyvalent organic group M defined above include, but are not particularly limited to, the groups shown below.

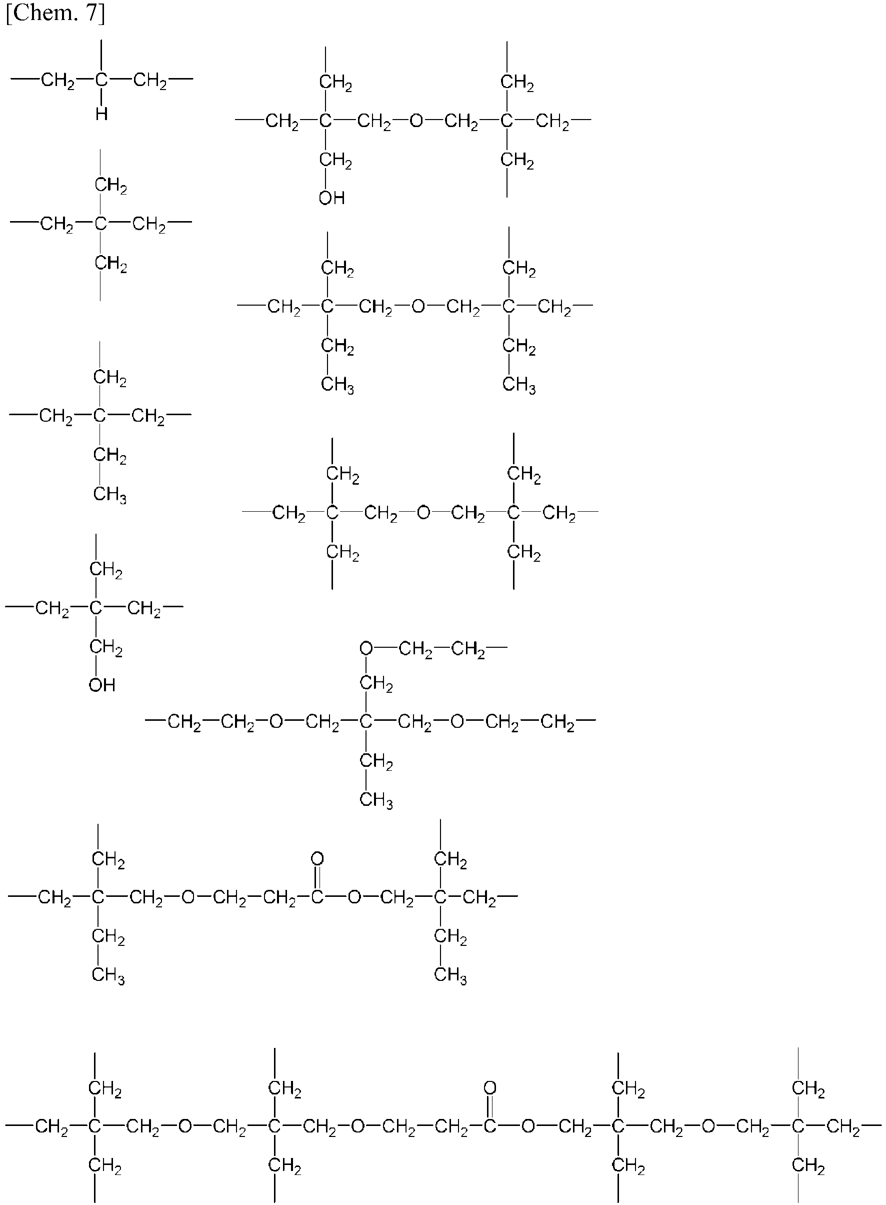

In the formula (1), Xi represents a group selected from a hydrogen atom, an alkyl group having 1 to 18 carbon atoms (this alkyl group may contain at least one selected from an ether bond, an ester bond, an amide bond, and a hydroxyl group) and a group represented by formula (3) defined below, and Xᵢ preferably represents a group defined by formula (3):

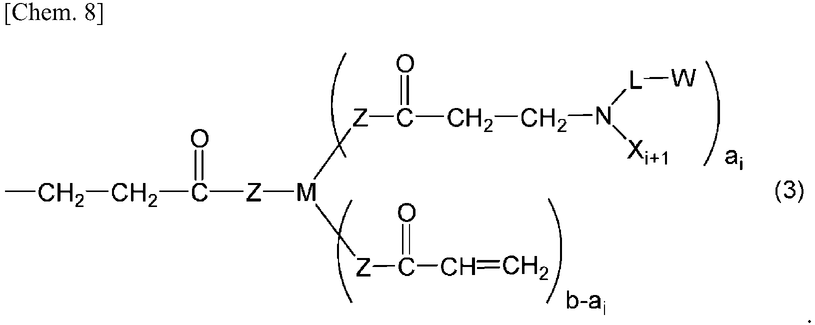

In the formula (3), M, Zs, Ls, Ws, b, and Xᵢs are as exemplified for the ones defined in the formula (1). i is a number of 1 to 5, preferably of 1 to 3, provided that i begins with 1. aᵢ is a number of 0 to b provided that a₅ is 0.

Examples of Xᵢ defined above include, but are not particularly limited to, the groups as defined below:

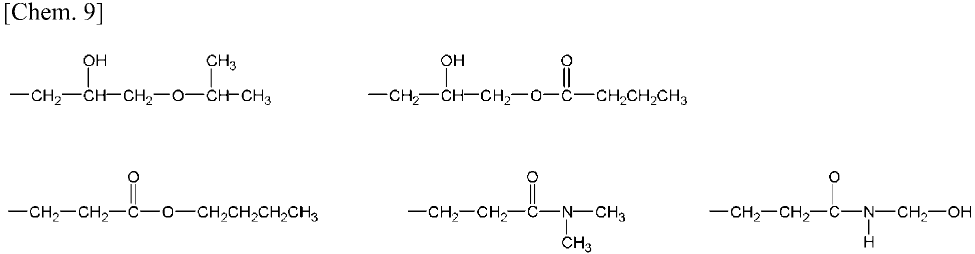

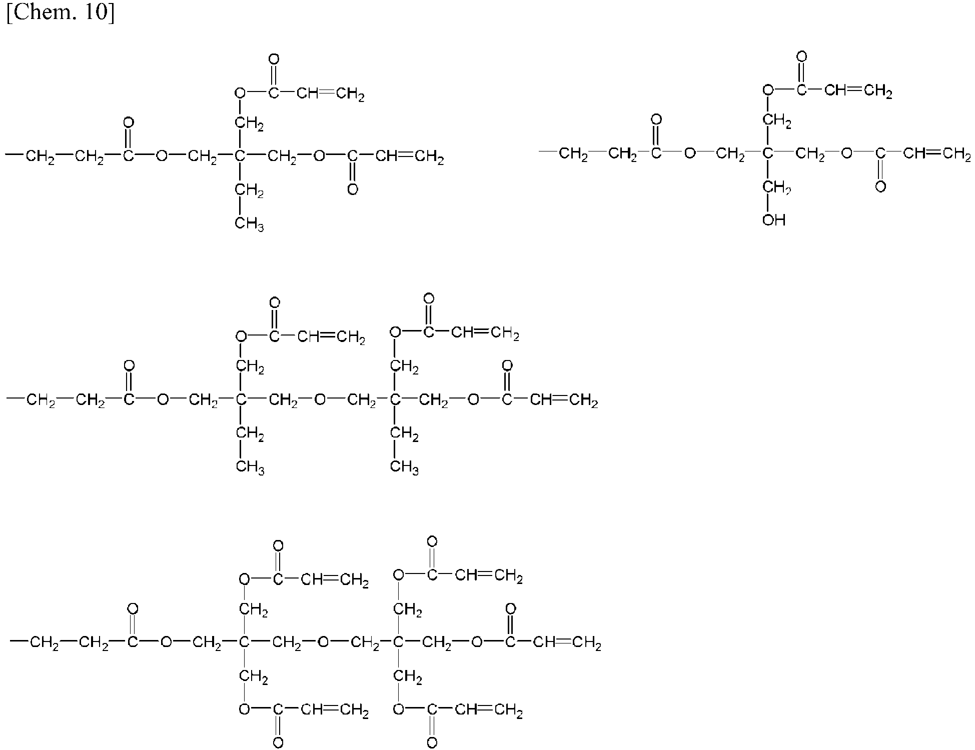

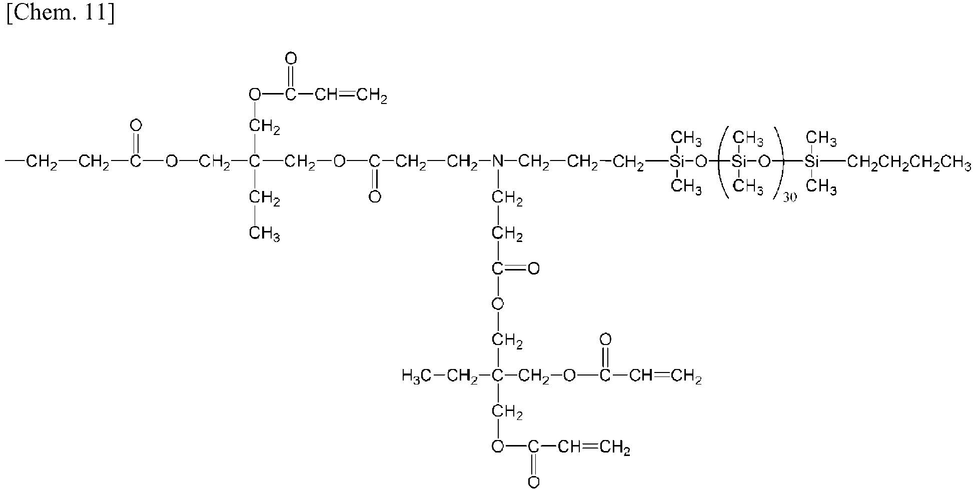

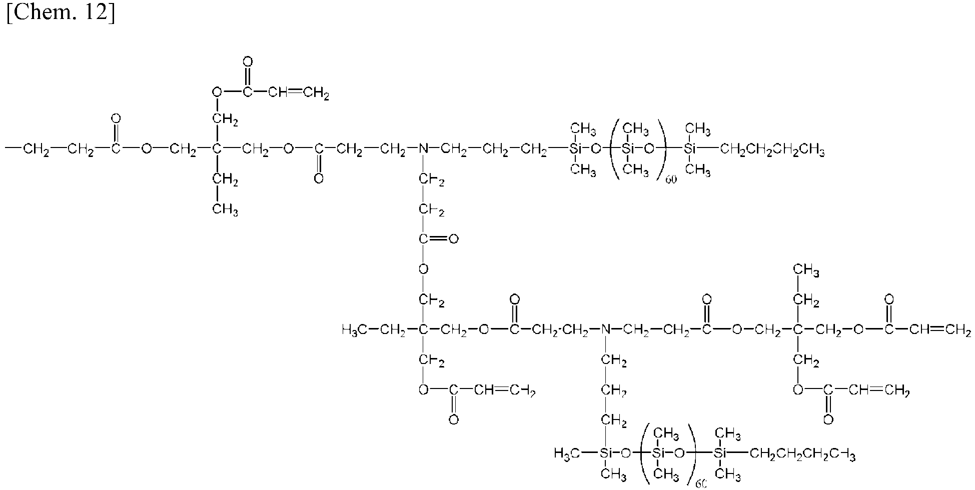

### [Method for producing organopolysiloxane compound]

The organopolysiloxane compound of the present invention represented by the above formula (1) may be produced by, for example, a method explained below.

Specifically, the Michael addition reaction, as depicted by the reaction formula (A) below, may be used to react an organopolysiloxane, having a primary or secondary amino group at one end, with a tri- or higher functional acrylic compound having a valence of (b+1) to thereby produce the compound.

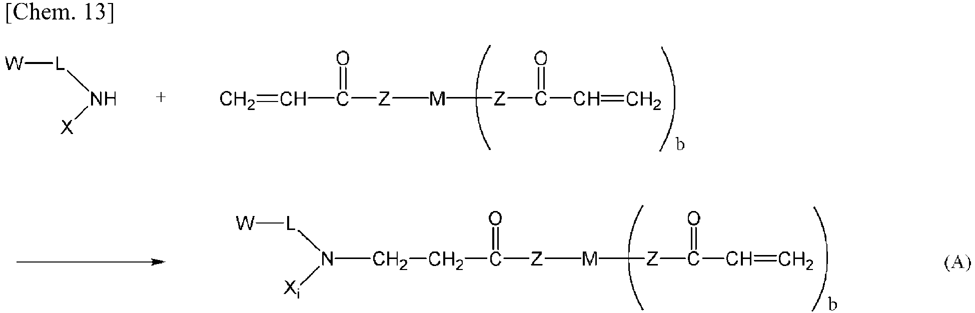

In the reaction formula (A) above, examples of W, L, Xᵢ, Z, b, and M include those as defined in the formula (1). X is a hydrogen atom or an alkyl group having 1 to 18 carbon atoms (this alkyl group may contain at least one selected from an ether bond, an ester bond, an amide bond, and a hydroxyl group), where Xᵢ in the reaction product reduces to a group represented by the formula (3) through the reaction of two equivalents of acrylic groups per - NH₂ when X is a hydrogen atom; that is, when the organopolysiloxane contains a primary amino group.

Examples of the tri- or higher functional acrylic compound include 3-functional acrylic monomers such as trimethylolpropane triacrylate, ethoxylated trimethylolpropane triacrylate, glycerol triacrylate, and pentaerythritol triacrylate; 4-functional acrylic monomers such as pentaerythritol tetraacrylate, ethoxylated pentaerythritol tetraacrylate, and ditrimethylolpropane tetraacrylate; 5-functional acrylic monomers such as dipentaerythritol pentaacrylate; 6-functional acrylic monomers such as dipentaerythritol hexaacrylate; and oligomer acrylic compounds such as urethane acrylate, polyester acrylate, and epoxy acrylate. It is preferred in terms of Michael addition reactivity with an organopolysiloxane having an amino group that the tri- or higher functional acrylic compound be a 3 to 6 functional acrylic monomer.

It is preferable to conduct the reaction by adjusting the formulation to include one or more equivalents of the tri- or higher functional acrylic compound for each -NH- group in the organopolysiloxane. In this case, the reaction product is an organopolysiloxane compound, represented by the formula (1), having, per one molecule, at least two acryloyl groups at locations that are sterically close to each other within the molecule, making it favorably light-curable and reactive.

The above reaction may proceed without using any catalyst by only mixing an organopolysiloxane having an amino group with a tri- or higher functional acrylic compound and heating the mixture to produce the organopolysiloxane compound represented by the formula (1). However, an acid catalyst or a base catalyst may be added thereinto if necessary.

Examples of the acid catalyst include AlCl₃ and MgCl₂.

Examples of the base catalyst include non-nucleophilic tertiary amines (such as N,N,N',N'-tetramethyl-1,8-diaminonaphthalene and 1,8-diazabicyclo[5.4.0]undec-7-ene).

These catalysts may be used alone or two or more of them may be used in combination.

The above reaction may be performed at any temperature which is not particularly limited but it is preferable for preventing the polymerization of acrylic groups and promoting the reaction that the temperature be 20 to 100°C, more preferably 50 to 80°C.

The above reaction may be performed for any duration which is not particularly limited but it is preferred that the duration be 3 to 24 hours, more preferably 6 to 18 hours.

A solvent may be added if necessary to perform the above reaction. The added solvent makes it easy for the organopolysiloxane having an amino group and the tri- or higher functional acrylic compound to be compatible with each other, and may efficiently enable promotion of the Michael addition reaction. It is preferred that the solvent have no groups capable of reacting with an amino group or an acrylic group, and examples thereof include hydrocarbons (such as toluene, xylene, n-hexane, and cyclohexane) and ethers (such as diethyl ether, tetrahydrofuran, and 1,4-dioxane). Any one kind of these solvents may be used alone or two or more of them may be used in combination.

Further, a polymerization inhibitor may also be added if necessary to perform the above reaction. Examples of such polymerization inhibitor may include those that have been conventionally used for acrylic compounds. Specific examples of the polymerization inhibitor include phenolic polymerization inhibitors such as hydroquinone, methylhydroquinone, hydroquinone monomethyl ether, 2-tert-butylhydroquinone, 4-methoxyphenol, and 2,6-di-tert-butyl-p-cresol. Any one kind of these polymerization inhibitors may be used alone, or two or more kinds thereof may be used in combination. There are no particular limitations on the amount of the polymerization inhibitor; it is preferred that the polymerization inhibitor be used in an amount of 5 to 1,000 ppm, more preferably 20 to 500 ppm, with respect to the mass of the compound to be obtained.

### [Composition containing organopolysiloxane compound]

The composition of the present invention contains the organopolysiloxane compound of the present invention as described above. The composition of the present invention may contain not only the above-described organopolysiloxane compound of the present invention but also at least one acrylic compound that is not within the scope of the organopolysiloxane compound of the present invention.

Further, the method for producing the organopolysiloxane compound involves a reaction that may leave an unreacted tri- or higher functional acrylic compound having a valence of (b+1) (e.g., a poly functional acrylic monomer) in the reaction product. That is, this reaction may provide a mixture of the organopolysiloxane compound of the present invention represented by the formula (1) and an unreacted tri- or higher functional acrylic compound having a valence of (b+1).

Accordingly, examples of methods for preparing the composition of the present invention include a method of providing the reaction product obtained in the above-described method as a composition of the present invention containing an organopolysiloxane compound represented by the formula (1) and a tri- or higher functional acrylic compound having a valence of (b+1). In this case, examples of the tri- or higher functional acrylic compound having a valence of (b+1) contained in the composition of the present invention include a variety of acrylic compound listed as tri- or higher functional acrylic compounds each having a valence of (b+1) shown in the above reaction formula (A), and it is preferred that the acrylic compound be a 3- to 6- functional acrylic monomer.

Further, the mixture of the organopolysiloxane compound represented by the formula (1) obtained in the above reaction and the unreacted tri- or higher functional acrylic compound having a valence of (b+1) may be used directly or purified by a conventional method to which at least one type of acrylic compound, preferably a polyvalent acrylic monomer having a valence of (b+1), more preferably a 3- to 6- functional acrylic monomer, may be separately added to produce the composition of the present invention.

### [Cured product]

The composition according to the present invention may be cured to produce a cured product of the present invention. A conventional method may be used to radically polymerize the above composition by heat or light to promote the curing to produce the cured product.

### Examples

The present invention will be described in detail hereunder with reference to working and comparative examples; the present invention shall not be limited to the following working examples. In the following examples, the number average molecular weight and dispersity (weight average molecular weight/number average molecular weight) are polystyrene-equivalent values determined by GPC (gel permeation chromatography) measurement using tetrahydrofuran as a developing solvent under the conditions shown below.

### [Measurement Conditions]

| | |
|---|---|
| Developing Solvent: | Tetrahydrofuran |
| Flow Rate: | 0.6 mL/min |
| Detector: | Refractive Index Detector (RI) |
| Column: | TSK Guard Column Super H-H |
| | TSKgel Super HM-N (6.0 mm I.D. × 15 cm × 1) |
| | TSKgel Super H2500 (6.0 mm I.D. × 15 cm × 1) |
| | (All manufactured by Tosoh Corporation) |
| Column Temperature: | 40°C |
| Sample Injection Volume: | 50 µL (0.3 wt% tetrahydrofuran solution) |

### [Working Example 1]

5.93 g of trimethylolpropane triacrylate, 4.37 g of toluene, and 0.005g of 2,6-di-tert-butyl-p-cresol were put into a reaction container and stirred with each other, followed by adding, by drops, a solution, consisting of 8.57g of an organopolysiloxane having an amino group at its one end and represented by formula (8-1) shown below and 5.61 g of toluene over one hour at 60°C to prepare a mixed solution. The resultant mixed solution was further stirred at 60°C for another 12 hours from which the toluene was then distilled away under reduced pressure to obtain a liquid product. 14.5 g of hexane was added to the resultant liquid product to make a solution to which 29.0 g of methanol was then added to perform washing, followed by liquid separation to recover the hexane phase. The hexane was then distilled away under reduced pressure from the hexane phase to obtain 8.3 g of a liquid product.

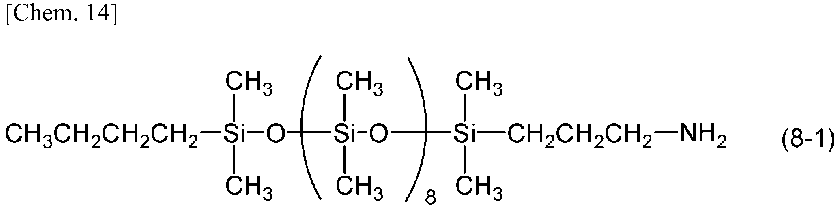

**[Table 1]**

| GPC measurement results of the resultant liquid product | | | | |
|---|---|---|---|---|
| GPC peak | Number average molecular weight | Dispersity | GPC area % | Determined compound |
| 1 | 3,900 | 1.20 | 47.6 | Formula (1-1) specified below |
| | | | | Formula (1-2) specified below |
| 2 | 1,560 | 1.05 | 25.2 | Formula (1-3) specified below |
| 3 | 292 | 1.25 | 27.2 | Trimethylolpropane triacrylate |

**[Table 2]**

| Chemical shift of ¹H-NMR spectrum of the resultant liquid product (Measurement device: AVANCE 400 manufactured by Bruker Corporation; Solvent: CDCl₃) | | |
|---|---|---|
| Shifts (ppm; TMS reference) | | Integral ratio (H) |
| -0.27 to 0.12 | -Si-CH₃ | 60 |
| 0.44 | -Si-CH₂-CH₂-CH₂-N< | 2 |
| 0.51 | -Si-CH₂-(CH₂)₂-CH₃ | 2 |
| 0.71 to 0.95 | -Si-CH₂-(CH₂)₂-CH₃ (CH₂=CH-COO-CH₂-)₃C-CH₂-CH₃ | 12 |
| 1.28 | -Si-CH₂-(CH₂)₂-CH₃ | 4 |
| 1.40 | -Si-CH₂-CH₂-CH₂-N< | 2 |
| 1.43 to 1.58 | (CH₂=CH-COO-CH₂-)₃C-CH₂-CH₃ | 6 |
| 2.42 | -Si-CH₂-CH₂-CH₂-N< >N-CH₂-CH₂-(C=O)-O- | 6 |
| 2.74 | >N-CH₂-CH₂-(C=O)-O- | 4 |
| 3.90 to 4.20 | CH₂=CH-COO-CH₂- | 16 |
| 5.82 | CH₂=CH-COO- | 5 |
| 6.08 | CH₂=CH-COO- | 5 |
| 6.37 | CH₂=CH-COO- | 5 |

The above results demonstrate that the resultant liquid product was a mixture of organopolysiloxanes represented by formulae (1-1), (1-2), and (1-3) shown below and trimethylolpropane triacrylate.

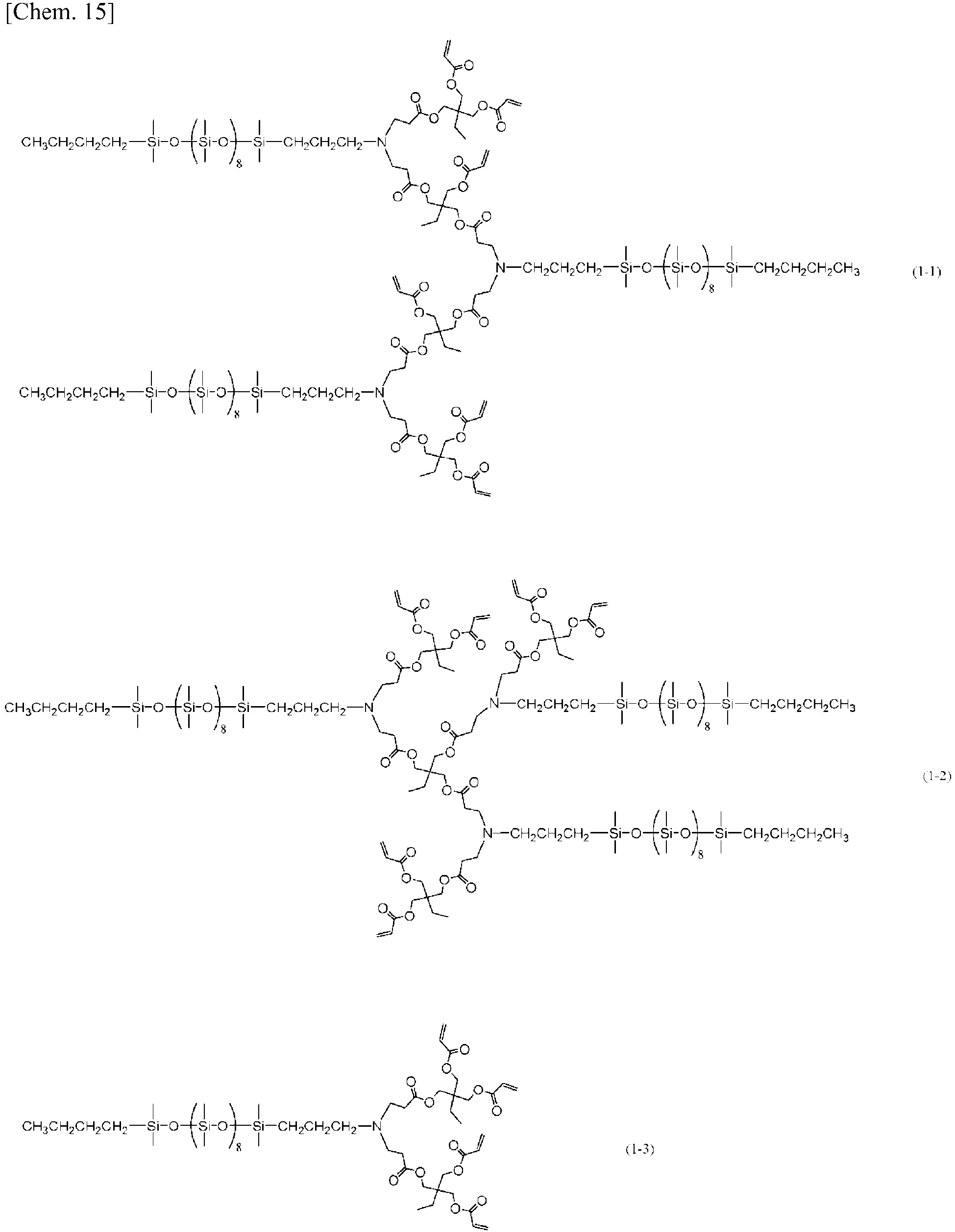

### [Working Example 2]

5.93 g of trimethylolpropane triacrylate, 4.07 g of toluene, and 0.006g of 2,6-di-tert-butyl-p-cresol were put into a reaction container and stirred with each other, followed by adding, by drops, a solution consisting of 12.4 g of an organopolysiloxane having an amino group at its one end and represented by formula (8-2) shown below and 8.80 g of toluene over one hour at 60°C to prepare a mixed solution. The resultant mixed solution was further stirred at 60°C for another 12 hours from which the toluene was then distilled away under reduced pressure to obtain a liquid product. 18.3 g of hexane was added to the resultant liquid product to make a solution to which 36.6 g of methanol was then added to perform washing, followed by liquid separation to recover the hexane phase. The hexane was then distilled away under reduced pressure from the hexane phase to obtain 11.9 g of a liquid product.

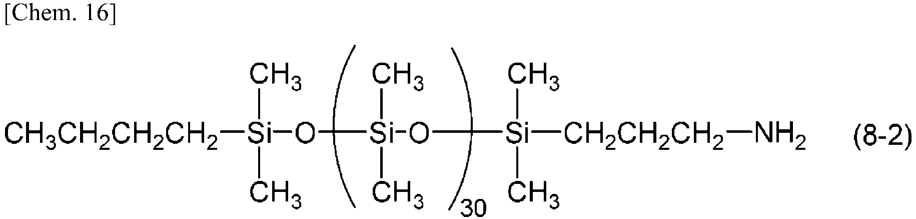

**[Table 3]**

| GPC measurement results of the resultant liquid product | | | | |
|---|---|---|---|---|
| GPC peak | Number average molecular weight | Dispersity | GPC area % | Determined compound |
| 1 | 9,090 | 1.20 | 41.0 | Formula (1-4) specified below |
| | | | | Formula (1-5) specified below |
| 2 | 3,700 | 1.05 | 43.3 | Formula (1-6) specified below |
| 3 | 270 | 1.25 | 15.6 | Trimethylolpropane triacrylate |

**[Table 4]**

| Chemical shift of ¹H -NMR spectrum of the resultant liquid product (Measurement device: AVANCE 400 manufactured by Bruker Corporation; Solvent: CDCl₃) | | |
|---|---|---|
| Shifts (ppm;TMS reference) | | Integral ratio (H) |
| -0.17 to 0.25 | -Si-CH₃ | 192 |
| 0.46 | -Si-CH₂-CH₂-CH₂-N< | 2 |
| 0.53 | -Si-CH₂-(CH₂)₂-CH₃ | 2 |
| 0.80 to 0.97 | -Si-CH₂-(CH₂)₂-CH₃ (CH₂=CH-COO-CH₂-)₃C-CH₂-CH₃ | 11 |
| 1.30 | -Si-CH₂-(CH₂)₂-CH₃ | 4 |
| 1.42 | -Si-CH₂-CH₂-CH₂-N< | 2 |
| 1.45 to 1.60 | (CH₂=CH-COO-CH₂-)₃C-CH₂-CH₃ | 5 |
| 2.43 | -Si-CH₂-CH₂-CH₂-N< >N-CH₂-CH₂-(C=O)-O- | 6 |
| 2.76 | >N-CH₂-CH₂-(C=O)-O- | 4 |
| 3.94 to 4.21 | CH₂=CH-COO-CH₂- | 14 |
| 5.84 | CH₂=CH-COO- | 5 |
| 6.11 | CH₂=CH-COO- | 5 |
| 6.39 | CH₂=CH-COO- | 5 |

The above results demonstrate that the resultant liquid product was a mixture of organopolysiloxanes represented by formulae (1-4), (1-5), and (1-6) shown below and trimethylolpropane triacrylate.

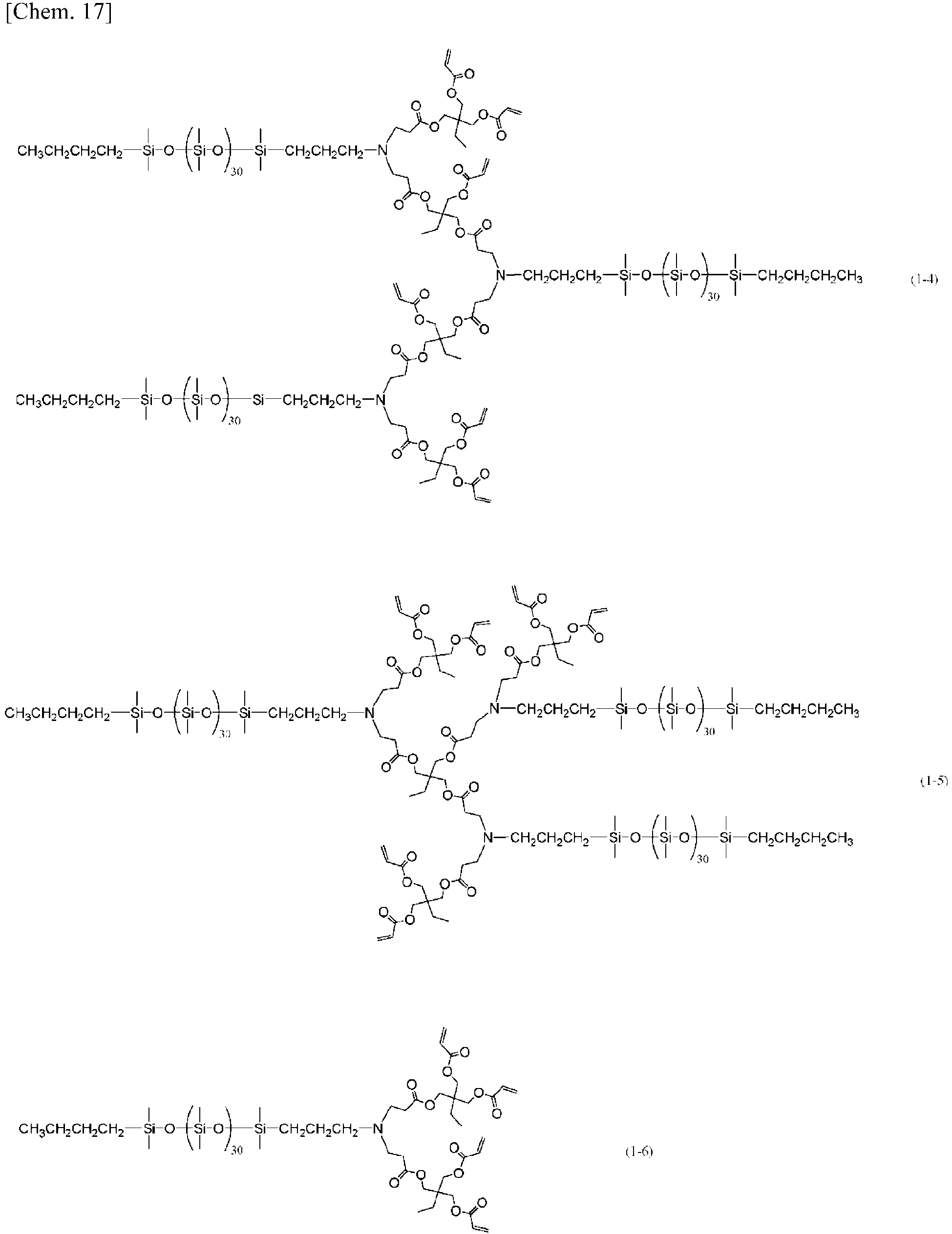

### [Working Example 3]

11.6 g of dipentaerythritol hexaacrylate, 13.4 g of toluene, and 0.006 g of 2,6-di-tert-butyl-p-cresol were put into a reaction container and stirred with each other, followed by adding, by drops, 8.57g of an organopolysiloxane having an amino group at its one end and represented by formula (8-1) shown below over one hour at 60°C to prepare a mixed solution. The resultant mixed solution was further stirred at 60°C for another 12 hours from which the toluene was then distilled away under reduced pressure to obtain 14.3 g of a liquid product.

**[Table 5]**

| GPC measurement results of the resultant liquid product | | | | |
|---|---|---|---|---|
| GPC peak | Number average molecular weight | Dispersity | GPC area % | Determined compound |
| 1 | 4,350 | 1.15 | 31.8 | Formula (1-7) specified below |
| | | | | Formula (1-8) specified below |
| | | | | Formula (1-9) specified below |
| 2 | 1,950 | 1.05 | 24.2 | Formula (1-10) specified below |
| 3 | 231 | 2.62 | 44.0 | Dipentaerythritol hexaacrylate |

**[Table 6]**

| Chemical shift of ¹H -NMR spectrum of the resultant liquid product (Measurement device: AVANCE 400 manufactured by Bruker Corporation; Solvent: CDCl₃) | | |
|---|---|---|
| Shifts (ppm;TMS reference) | | Integral ratio (H) |
| -0.27 to 0.12 | -Si-CH₃ | 60 |
| 0.44 | -Si-CH₂-CH₂-CH₂-N< | 2 |
| 0.51 | -Si-CH₂-(CH₂)₂-CH₃ | 2 |
| 0.89 | -Si-CH₂-(CH₂)₂-CH₃ | 3 |
| 1.30 | -Si-CH₂-(CH₂)₂-CH₃ | 4 |
| 1.41 | -Si-CH₂-CH₂-CH₂-N< | 2 |
| 1.43 to 1.58 | (CH₂=CH-COO-CH₂-)₃C-CH₂-CH₃ | 6 |
| 2.43 | -Si-CH₂-CH₂-CH₂-N< >N-CH₂-CH₂-(C=O)-O- | 6 |
| 2.74 | >N-CH₂-CH₂-(C=O)-O- | 4 |
| 3.29 to 3.52 | -CH₂-O-CH₂- | 8 |
| 3.97 to 4.33 | CH₂=CH-COO-CH₂- | 22 |
| 5.84 | CH₂=CH-COO- | 9 |
| 6.09 | CH₂=CH-COO- | 9 |
| 6.39 | CH₂=CH-COO- | 9 |

The above results demonstrate that the resultant liquid product was a mixture of organopolysiloxanes represented by formulae (1-7), (1-8), (1-9), and (1-10) shown below and dipentaerythritol hexaacrylate.

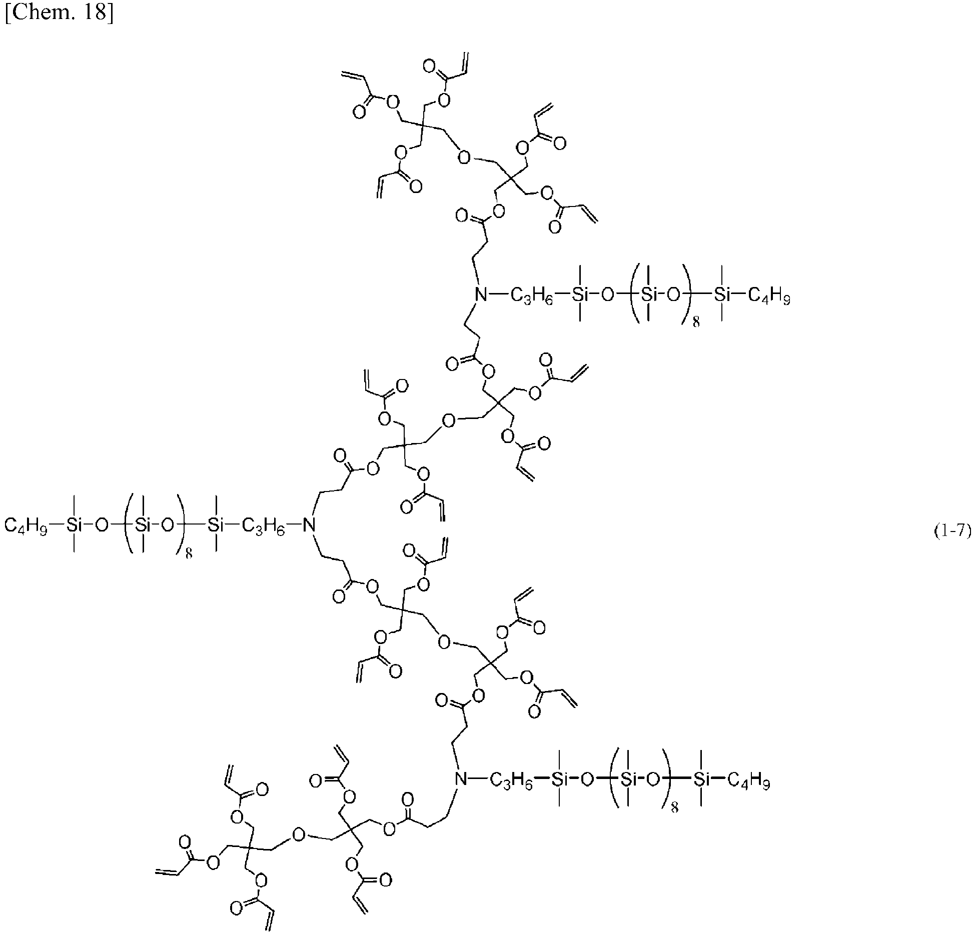

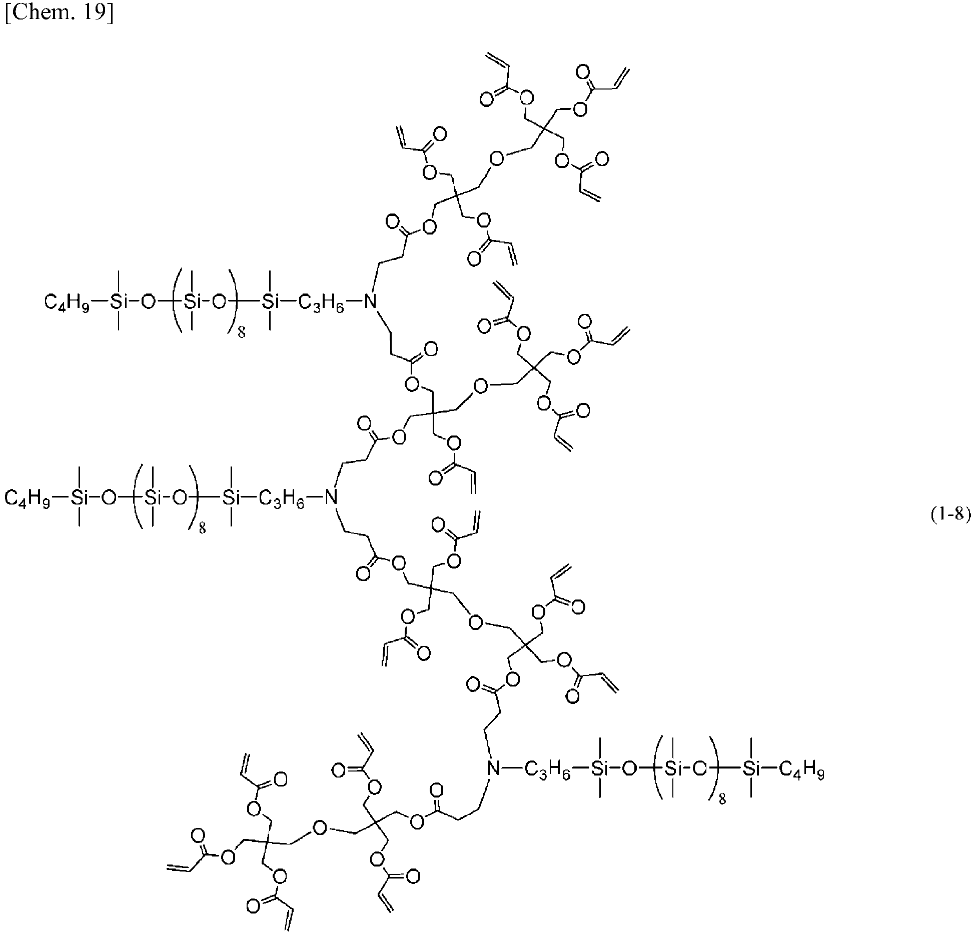

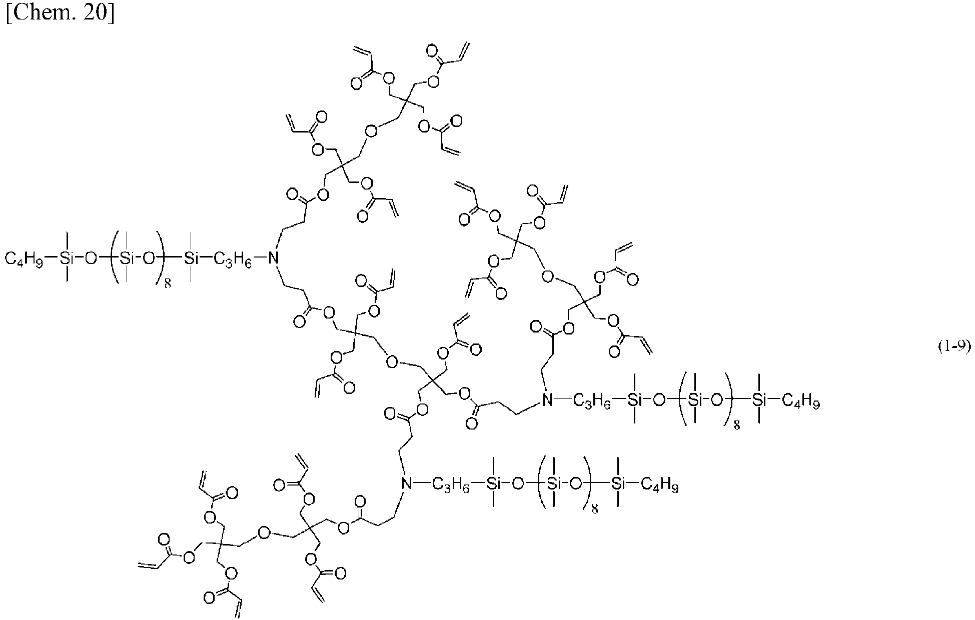

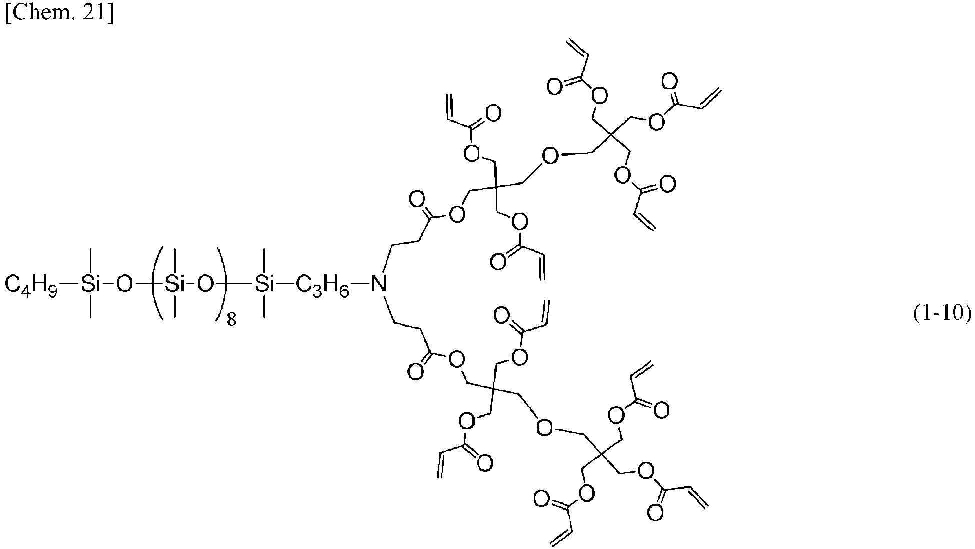

### [Comparative Example 1]

A mono acrylic-modified organopolysiloxane represented by formula (9) defined as

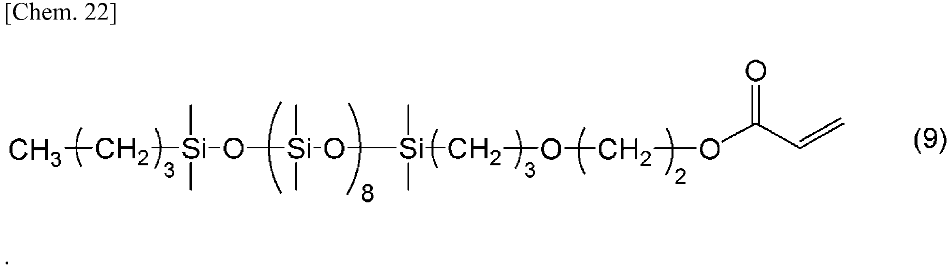

### [Comparative Example 2]

A polyfunctional acrylic-modified organopolysiloxane represented by formula (10) defined as

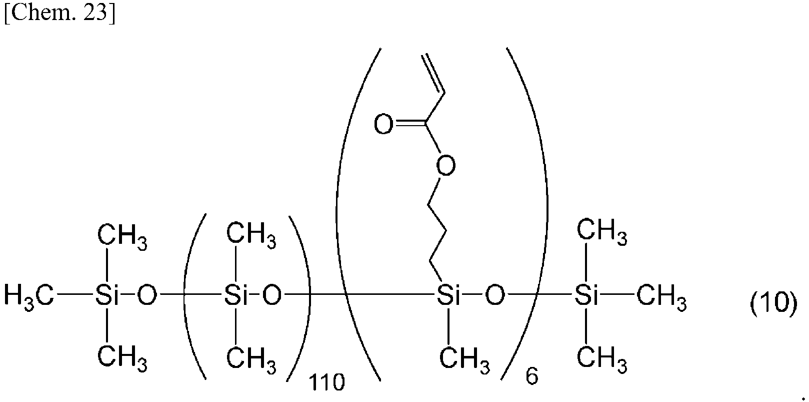

### [Comparative Example 3]

Trimethylolpropane triacrylate

### [Comparative Example 4]

Dipentaerythritol hexaacrylate

### [Evaluation of UV Curability]

0.020 g of photopolymerization initiator, Omnirad 1173 manufactured by IGM Resins, was added to 10 g of each of the compositions of the working examples or the compounds of the comparative examples to prepare a liquid composition. The gelation time (the time at which the storage modulus (G') = loss modulus (G")) of the liquid composition was measured under the following conditions using a viscoelasticity measuring device (DHR2 (Discovery Hybrid Rheometer) manufactured by TA Instruments) to evaluate UV curability.

### [Gelation Time Measurement Conditions]

| | |
|---|---|
| UV Light Source: | OmniCure SERIES 2000 (manufactured by Excelitas Technologies Corp.) |
| UV Illuminance: | 10 mW/cm² |
| Viscoelasticity Measurement Device: | DHR2 (Discovery Hybrid Rheometer) (manufactured by TA Instruments) |
| Measurement Mode: | Compression |
| Initial Torque: | 10.0 µN·m |
| Strain: | 10.0% |
| Frequency: | 25.0 Hz |
| Sample Film Thickness: | 200 µm |

**[Table 7]**

| | Working Example 1 | Working Example 2 | Working Example 3 | Comparative Example 1 | Comparative Example 2 | Comparative Example 3 | Comparative Example 4 |
|---|---|---|---|---|---|---|---|
| Gelation time (seconds) | 17.4 | 21.7 | 34.6 | 90.3 | 78.8 | 28.9 | 51.7 |

### [Evaluation of bleeding]

10 g of trimethylolpropane triacrylate and 0.1 g of photopolymerization initiator, Omnirad 1173 manufactured by IGM Resins, were added to 0.5 g of each of the compositions of the working examples or the compounds of the comparative examples to prepare a liquid composition, and each solution was applied to a polycarbonate substrate using a No. 4 bar coater. An ultraviolet curing device (MUVBA manufactured by AITEC SYSTEM Co., Ltd.) was used to irradiate the coated film with UV light of 365 nm wavelength and 140 mW/cm² intensity for two seconds under a nitrogen atmosphere at room temperature to cure the film, and the presence or absence of bleeding was then evaluated through tactile assessment. The results are as shown in table 8.

**[Table 8]**

| | Working Example 1 | Working Example 2 | Working Example 3 | Comparative Example 1 | Comparative Example 2 |
|---|---|---|---|---|---|
| Presence or absence of bleeding | Absent | Absent | Absent | Present | Present |

The results in Table 7 show that the organopolysiloxane compounds of the present invention reach their gelation time points earlier than those of the conventional acrylic-modified organopolysiloxanes, demonstrating more enhanced UV curability of the compounds. Furthermore, it was surprisingly found that the organopolysiloxane compound of the present invention, in which an organopolysiloxane having a primary amino group is subjected to Michael addition to a polyfunctional acrylic compound, has higher UV curability than the polyfunctional acrylic compound used as the raw material. Furthermore, the results in Table 8 show that the organopolysiloxane compounds of the present invention have high UV curability, and therefore react well even with a small amount of UV irradiation, thus demonstrating it is less likely to bleed. The organopolysiloxane compound of the present invention is therefore useful as an ingredient to be blended into, for example, UV-curable resin compositions, or as a UV-curable silicone elastomer.

## Claims

1. An organopolysiloxane compound represented by formula (1) defined as 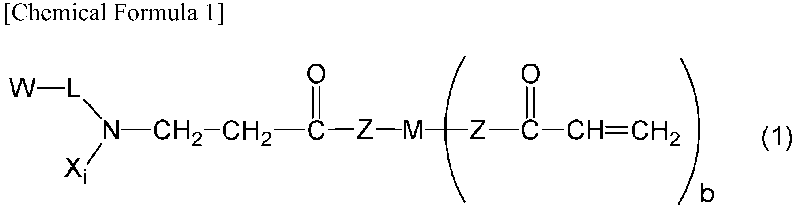
wherein, in the formula (1), W is a group represented by formula (2) defined as 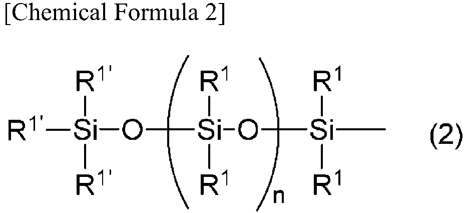 wherein, in the formula (2), each of R¹ s and R^{1'}s independently represents a group selected from an alkyl group having 1 to 18 carbon atoms and an aryl group having 6 to 18 carbon atoms, and n is a number of 0 to 500, and
wherein L represents an alkylene group having 2 to 12 carbon atoms, each Z independently represents an oxygen atom, a sulfur atom, or a group represented by NR² where R² in the NR² is a hydrogen atom or an alkyl group having 1 to 12 carbon atoms, b is a number of 2 to 20, M represents a polyvalent organic group having (b+1) valency, Xᵢ represents at least one group selected from a hydrogen atom, an alkyl group having 1 to 18 carbon atoms (said alkyl group optionally containing at least one selected from an ether bond, an ester bond, an amide bond, and a hydroxyl group) and a group represented by formula (3) defined as 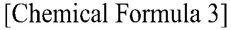 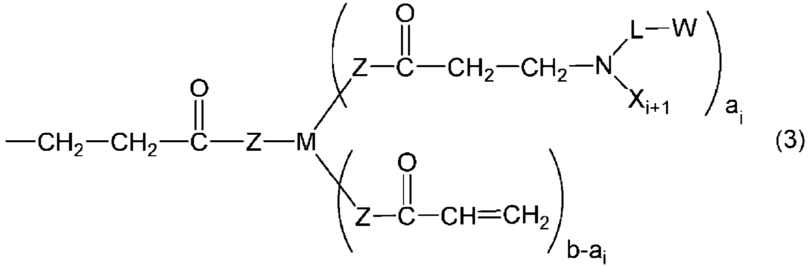 wherein, in the formula (3), M, Zs, Ls, Ws, b and Xᵢs are as defined above, i is a number of 1 to 5 provided that i begins with 1, and aᵢ is a number of 0 to b provided that a₅ is 0.

2. The organopolysiloxane compound according to claim 1, wherein Xᵢ is a group represented by the formula (3).

3. The organopolysiloxane compound according to claim 1, wherein Xᵢ is a group represented by the formula (3) and i is a number of 1 to 3.

4. A composition comprising the organopolysiloxane compound according to claim 1.

5. The composition according to claim 4, further comprising at least one acrylic compound that is not a compound of said organopolysiloxane compound.

6. The composition according to claim 5, wherein the acrylic compound is a polyvalent acrylic monomer having a valence of (b+1).

7. A cured product of the composition according to claim 4.
